# FASCICULE DE BREVET EUROPEEN

(11) **EP 1 304 246 B1**
(45) Date de publication et mention de la délivrance du brevet: **14.01.2009**
(21) Numéro de dépôt: 02292579.6
(22) Date de dépôt: 18.10.2002
(51) Int. Cl.: B60J 1/20

(54) **Pare-soleil pour vitre latérale de véhicule**
Sonnenblende für Fahrzeug-Seitenscheibe
Sun visor for vehicle side window

(30) Priorité: 19.10.2001 FR 0113507
(43) Date de publication de la demande: 23.04.2003
(73) Titulaire: RENAULT S.A.S., 92100 Boulogne Billancourt (FR)
(72) Inventeur: Caffarri, Sergio, 78800 Houilles (FR)

(56) Documents cités:
- EP-A- 1 129 871
- DE-A- 3 822 378
- DE-C- 4 335 309
- DE-C- 4 336 761

## Description

Le sujet de cette invention est un pare-soleil pour une vitre latérale d'un véhicule.

On connaît déjà divers dispositifs de pare-soleil pour véhicules automobiles, destinés soit au pare-brise, soit aux vitres latérales, voire à la lunette arrière. Beaucoup sont entièrement indépendants du véhicule ; ils consistent, par exemple, en des écrans plissés dont les angles s'appuient sur des reliefs de l'habitacle ou en feuilles collées par des ventouses ou d'autres moyens sur les surfaces vitrées à couvrir. Ils ne sont généralement pas associés à un modèle particulier de véhicule et leur forme n'est donc pas adaptée à la surface vitrée qu'ils doivent couvrir, de sorte que l'obturation qu'ils procurent n'est pas complète. Ils peuvent aussi se révéler encombrants quand ils ne sont pas utilisés, et fragiles ou incommodes à installer.

L'invention à plutôt trait a des pare-soleil associés à un véhicule et à une surface de vitre déterminés, même s'ils peuvent être amovibles et retirés complètement du véhicule si on le souhaite. De tels pare-soleil sont aussi connus et certains comprennent un rideau monté sur un axe enrouleur dont le bord libre est tiré pour le dérouler ; le bord libre et la structure du véhicule sont munis d'un moyen d'accrochage ou de fixation qui permet de maintenir le rideau à un état déroulé où il couvre la surface vitrée pour laquelle il a été conçu. On peut citer le brevet américain 5 575 524 pour un exemple. Le brevet DE 3822378 représente l'état de la technique le plus proche.

Il apparaît cependant que ces pare-soleil à rideau ont été proposés pour le pare-brise plutôt que pour des vitres latérales d'automobiles. La raison est probablement qu'un pare-soleil de pare-brise doit atténuer l'échauffement de l'habitacle et du volant en ne devant couvrir qu'une portion importante de la superficie vitrée, alors qu'un pare-soleil pour une vitre latérale devrait couvrir cette vitre aussi complètement que possible pour procurer l'intimité souhaitée ou créer véritablement une pénombre propice au repos. Cela est difficile à réaliser avec des rideaux tendus de forme plane et sensiblement rectangulaire et qui doivent être accrochés à des structures galbées du véhicule. Dans le brevet antérieur mentionné, un jour important apparaît au-dessus du pare-soleil, au sommet du pare-brise, et ne s'oppose donc pas à l'éblouissement des occupants. Cela n'est pas gênant avec un dispositif qui ne peut être utilisé que quand le véhicule stationne et reste normalement vide, mais serait regrettable pour un pare-soleil de vitre latérale, qui serait utilisé pendant le trajet pour le confort de passagers à l'arrière.

Le pare-soleil conforme à l'invention reprend la conception du rideau à enrouleur en l'adaptant de façon véritablement utile à une vitre latérale d'un véhicule. Précisément, le rideau enrouleur est dédoublé et le pare-soleil comprend donc une paire de rideaux et d'axes d'enroulement, et ces derniers peuvent être montés sur une baguette verticale de la structure du véhicule séparant la vitre en deux panneaux (c'est-à-dire, normalement, la glissière de guidage d'une vitre coulissante) ; des moyens d'accrochage des bords libres des rouleaux au véhicule sont encore prévus pour maintenir ceux-ci à l'état déroulé.

On verra que cette disposition permet de couvrir presque complètement la vitre et de ne laisser subsister qu'un jour réduit et placé à un endroit favorable sans imposer de contraintes à l'aménagement du véhicule.

L'invention sera maintenant décrite plus en détail au moyen des figures suivantes :
- la figure 1 illustre l'agencement général de l'invention,
- la figure 2 est une vue de dessus du dispositif,
- et la figure 3 représente en détail l'extérieur du dispositif.

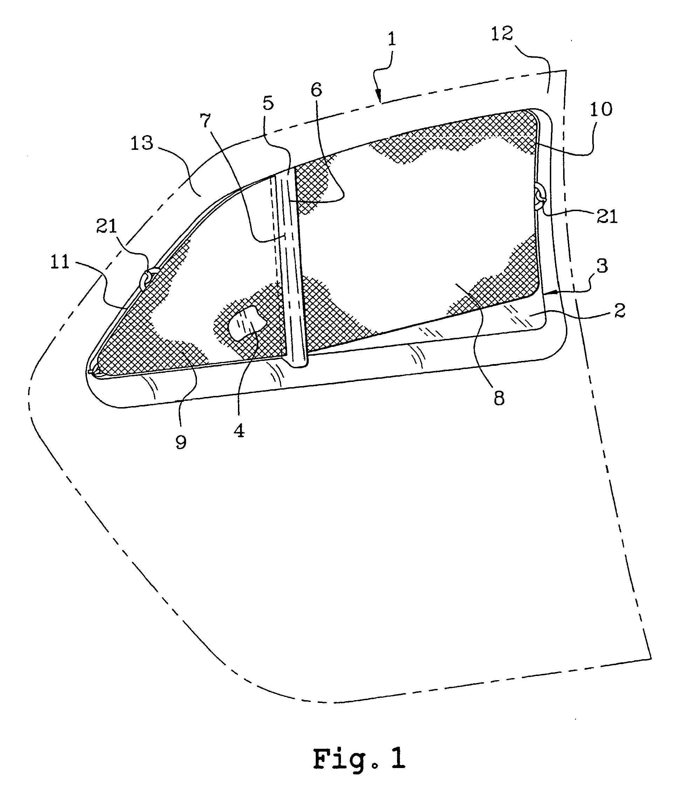

A la figure 1, une portière d'automobile comprend un cadre supérieur 1, une vitre 2 logée dans le cadre 1 et composée d'un panneau avant 3 coulissant verticalement sous l'action d'un mécanisme usuel d'ouverture et de fermeture et d'un panneau arrière 4 fixe ou pouvant s'entrouvrir en pivotant. Une baguette verticale 5 sépare les panneaux 3 et 4 et s'étend du sommet du cadre 1 à la partie principale de la portière. Des axes 6 et 7 (seulement esquissés sur cette figure) d'enroulement de deux rideaux 8 et 9 y sont fixés. Le rideau 9 situé à l'arrière couvre complètement le panneau arrière 4 quand il est déroulé ; mais comme le cadre 1 est plus haut vers l'avant ainsi qu'il est usuel, le panneau avant 3 a une forme trapézoïdale s'élargissant vers l'avant, à laquelle le rideau 8 correspondant ne peut s'adapter puisqu'il ne peut être plus large que son axe 6 est long. Un jour doit donc subsister. Il est préconisé de le placer au bas du panneau 3, où il est moins gênant puisqu'il n'éblouit pas l'occupant du véhicule. Il sera donc souvent avantageux que l'axe 6 au moins soit incliné par rapport à la baguette 5 et que les axes 6 et 7 ne soient pas parallèles pour que les rideaux 8 et 9 se déroulent dans la direction de meilleur couverture de la vitre 2. Il faut souligner que le bon aligement des bords supérieurs des panneaux 3 et 4 des rideaux 8 et 9, obtenu facilement avec les axes 6 et 7 sur la baguette 5 et qui abrite des rayons lumineux les plus gênants, serait beaucoup plus difficile à obtenir avec des rideaux qui eussent été déroulés vers le haut à partir d'axes englobés par la portière.

Un grand confort est alors obtenu. On remarquera aussi que, les rideaux 8 et 9 étant indépendants, un seul peut être utilisé à la fois : il est probable que le rideau 9 à l'arrière sera utilisé plus souvent pour protéger le visage d'un passager adossé ou un enfant du rayonnement solaire direct sans l'empêcher de voir par le panneau avant 3 ouvert ou fermé. On remarque encore que les rideaux 8 et 9 ont des formes choisies pour s'adapter aux contours des panneaux 3 et 4, notamment près de leurs bords libres 10 et 11, qui sont inclinés par rapport aux axes 6 et 7 ou présentent des coins arrondis d'après des raccords 12 et 13 courbes des sections du cadre 1.

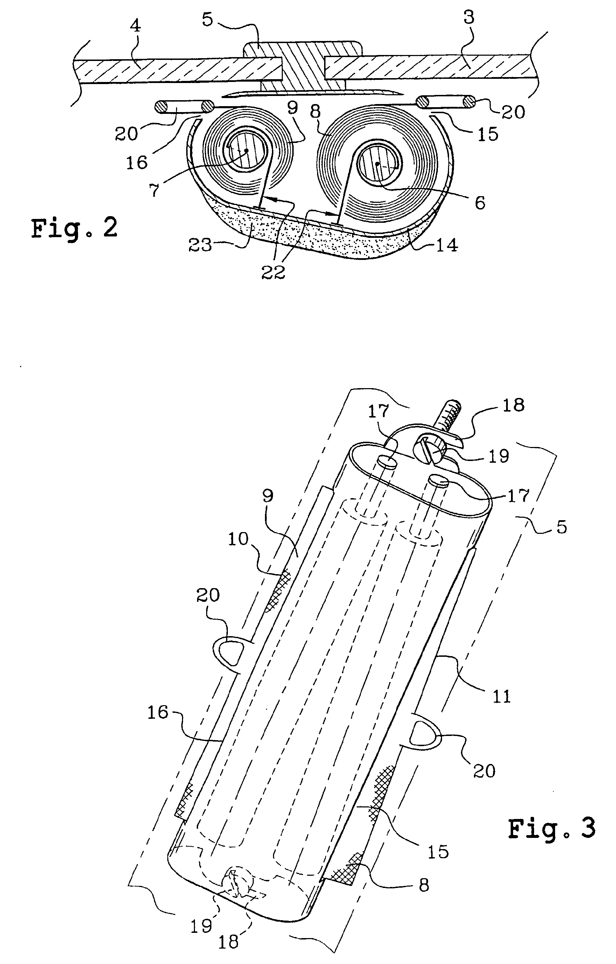

Le dispositif peut être intégré au véhicule dès sa fabrication, en étant fixé à demeure à la baguette 5, ou vendu séparément et amovible. Surtout dans ce second cas, il est avantageux que les axes 6 et 7 soient enfermés dans une coque 14 ( représentée aux figures 2 et 3) simplement pourvue de fentes 15 et 16 de passage des rideaux 8 et 9. Les axes 6 et 7 sont montés à des extrémités de la coque 14 par des paliers 17, et la coque 14 est fixée à la baguette 5 (sans coque, les axes 6 et 7 seraient fixés à la baguette 5 par des montants en équerre ou des moyens équivalents). La coque 14 est à cet effet pourvue de crochets 18 dans lesquels des vis 19 de fixation à la baguette 5 sont engagées. Les bords libres des rideaux 8 et 9 sont pourvus d'éléments d'accrochage consistant en des ventouses, agrafes, oeillets, boucles 20, etc. s'engageant sur des éléments de réception 21 établis sur le cadre 1 ou même sur la vitre 2. Des ressorts 22 de torsion sont prévus entre la coque 14 et les axes 6 et 7 pour rappeler les rideaux 8 et 9 en position enroulée et les tendre quand ils sont déployés. Tous ces éléments subaltermes de réalisation, qui appartiennent à la technique générale , pourraient être remplacés par leurs équivalents. Si une coque 14 est employée, il est cependant intéressant de la couvrir d'une couche de matière amortissante 23 susceptible de protéger les passagers de chocs possibles.

## Revendications

1. Pare-soleil pour une vitre latérale (2) d'un véhicule, **caractérisé en ce qu'**il comprend une paire de rideaux (8, 9) et d'axes (6, 7) d'enroulement des rideaux, les axes (6, 7) peuvent être montés sur une baguette (5) verticale de structure du véhicule séparant la vitre en deux panneaux (3,4), et des moyens d'accrochage (20, 21) de bords libres des rideaux au véhicule.

2. Pare-soleil suivant la revendication 1, **caractérisé en ce qu'**il comprend une coque (14) couvrant les axes (6,7) et munie de fentes (15, 16) de passage des rideaux.

3. Pare-soleil suivant la revendication 2, **caractérisé en ce qu'**il est amovible de la baguette (5) et comprend des moyens de fixation (18, 19) de la coque à la baguette et de support (17) des axes sur coque.

4. Pare-soleil suivant l'une quelconque des revendications 1 ou 2, **caractérisé en ce qu'**il est fixable à demeure à la baguette. à demeure à la baguette.

5. Pare-soleil suivant la revendication 2, **caractérisé en ce qu'**il comprend une couche de matière amortissante des chocs (23) couvrant la coque.

6. Pare-soleil suivant l'une quelconque de revendications 1 à 5, **caractérisé en ce que** les axes (6,7) ne sont pas parallèles.

7. Pare-soleil suivant la revendication 6, **caractérisé en ce qu'**au moins un des axes (6) est orienté pour que son rideau (8), déroulé sur un des panneaux, ayant une forme trapézoïdale, laisse une portion inférieure dudit panneau (3) à découvert.

8. Pare-soleil suivant l'une quelconque des revendications 1 à 7, **caractérisé par** des ressorts de rappel (22) des rideaux à un état enroulé sur les axes.

## Claims

1. Sun visor for a vehicle side window (2), **characterized in that** it comprises a pair of blinds (8, 9) and winding shafts (6, 7) for the blinds, wherein the shafts (6, 7) can be mounted on a vertical structural strip (5) of the vehicle, said strip dividing the window into two panels (3, 4), and means (20, 21) for hooking the free edges of the blinds to the vehicle.

2. Sun visor according to Claim 1, **characterized in that** it comprises a shell (14) covering the shafts (6, 7) and provided with slots (15, 16) for the blinds to pass through.

3. Sun visor according to Claim 2, **characterized in that** it can be detached from the strip (5) and comprises means (18, 19) for fastening the shell to the strip and means (17) for holding the shafts on the shell.

4. Sun visor according to either of Claims 1 and 2, **characterized in that** it can be permanently fastened to the strip.

5. Sun visor according to Claim 2, **characterized in that** it comprises a layer of shock absorbing material (23) covering the shell.

6. Sun visor according to any one of Claims 1 to 5, **characterized in that** the shafts (6, 7) are not parallel.

7. Sun visor according to Claim 6, **characterized in that** at least one of the shafts (6) is oriented such that when its blind (8) is unwound over one of the panels, which has a trapezoidal form, it leaves a bottom part of said panel (3) uncovered.

8. Sun visor according to any one of Claims 1 to 7, **characterized by** return springs (22) for returning the blinds to a wound state on the shafts.

## Patentansprüche

1. Sonnenblende für eine Seitenscheibe (2) eines Fahrzeugs, **dadurch gekennzeichnet, dass** sie ein Paar Vorhänge (8, 9) und Achsen (6, 7) zum Aufrollen der Vorhänge aufweist, wobei die Achsen (6, 7) auf eine senkrechte Strukturleiste (5) des Fahrzeugs, die die Scheibe in zwei Tafeln (3, 4) trennt, montiert werden können, und Anhängmittel (20, 21) freier Ränder der Vorhänge an dem Fahrzeug.

2. Sonnenblende nach Anspruch 1, **dadurch gekennzeichnet, dass** sie eine Schale (14) aufweist, die die Achsen (6, 7) abdeckt und die mit Schlitzen (15, 16) zum Durchgehen der Vorhänge versehen ist.

3. Sonnenblende nach Anspruch 2, **dadurch gekennzeichnet, dass** sie von der Leiste (5) abgenommen werden kann und Befestigungsmittel (18, 19) der Schale an der Leiste und Stützmittel (17) der Achsen auf der Schale aufweist.

4. Sonnenblende nach einem der Ansprüche 1 oder 2, **dadurch gekennzeichnet, dass** sie dauerhaft an der Leiste befestigt werden kann.

5. Sonnenblende nach Anspruch 2, **dadurch gekennzeichnet, dass** sie eine Schicht aus stoßdämpfendem Material (23), die die Schale abdeckt, aufweist.

6. Sonnenblende nach einem der Ansprüche 1 bis 5, **dadurch gekennzeichnet, dass** die Achsen (6, 7) nicht parallel sind.

7. Sonnenblende nach Anspruch 6, **dadurch gekennzeichnet, dass** mindestens eine der Achsen (6) so ausgerichtet ist, dass ihr Vorhang (8), der auf einer der Tafeln abgerollt ist, eine Trapezform hat und einen unteren Abschnitt der Tafel (3) unbedeckt lässt.

8. Sonnenblende nach einem der Ansprüche 1 bis 7, **gekennzeichnet durch** Rückholfedern (22) der Vorhänge zu einem auf den Achsen aufgerollten Zustand.
